# EUROPEAN PATENT APPLICATION

(11) **EP 4 786 830 A1**
(43) Date of publication of application: **05.08.2026**
(21) Application number: 25843418.2
(22) Date of filing: 10.06.2025
(51) Int. Cl.: F16K 5/00, F16K 5/08, F16K 27/06, F16K 37/00

(54) **POSITION SWITCH, PLUG VALVE AND GAS DEVICE**

(30) Priority: 26.07.2024 CN 202411017745
(71) Applicant: Midea Group Co., Ltd., Foshan, Guangdong 528311 (CN); Handan Midea Smart Kitchen Appliance Manufacturing Co., Ltd., Handan Hebei 056007 (CN)
(72) Inventor: HUANG, Huahong, Foshan, Guangdong 528311 (CN); QI, Zhengsheng, Foshan, Guangdong 528311 (CN)
(74) Representative: Ran, Handong
(86) International application number: PCT/CN2025/100258
(87) International publication number: WO 2026/021033

(57) **Abstract**

A position switch (400), a plug valve (10) and a gas device (1). The position switch (400) comprises: a housing (410), a position limiting assembly (420), a follow-up assembly (430) and a position feedback assembly (450), wherein the follow-up assembly (430) is configured to be connected to a valve stem (300) so as to rotate along with the valve stem (300), and the follow-up assembly (430) can be limited to one among a plurality of positions by the position limiting assembly (420); and the position feedback assembly (450) is used for detecting a current position of the follow-up assembly (430) and outputting a corresponding position feedback signal.

## Description

### CROSS-REFERENCE TO RELATED APPLICATION

This application claims priority to Chinese patent application No. 202411017745.9, titled "GEAR SWITCH, PLUG VALVE, AND GAS APPLIANCE" on July 26, 2024, which is hereby incorporated by reference in its entirety.

### FIELD

The present disclosure relates to the field of cooking appliance technologies, and more particularly, to a gear switch, a plug valve, and a gas appliance.

### BACKGROUND

Gas appliances utilize thermal energy generated from combustion of natural gas or liquefied gases (such as propane, butane, etc.). The high-temperature energy generated from combustion is converted into thermal energy that can be used for purposes such as cooking, heating, and drying. By adjusting a gas flow rate, combustion flame size can be effectively controlled to meet heat requirements of a user. However, in the related art, flow rate control devices can only adjust the flow rate and lack sufficient information feedback. The user often judges an adjustment effect by observing flame size, and it is difficult for the user to accurately know a specific current gas flow rate, which is inconvenient for the user to use.

### SUMMARY

The present disclosure aims to solve at least one of the technical problems in the related art. To this end, an objective of the present disclosure is to provide a gear switch. The gear switch can feedback a current gear status to facilitate a user to determine and adjust.

The present disclosure further provides a plug valve adopting the above-described gear switch.

The present disclosure further provides a gas appliance having the above-described plug valve.

In an embodiment of the present disclosure, a gear switch is provided. The gear switch is applied to a plug valve. The plug valve includes a valve stem. The gear switch includes a housing, a gear limiting assembly, a follower assembly, and a gear feedback assembly. The gear limiting assembly is disposed at the housing. The follower assembly is connected to the valve stem and configured to rotate following the valve stem. The follower assembly has a plurality of gears and is configured to be limited in one of the plurality of gears by the gear limiting assembly. The gear feedback assembly is disposed in the housing. The gear feedback assembly is configured to detect a current gear of the plurality of gears of the follower assembly and output a corresponding gear feedback signal.

According to some embodiments of the present disclosure, the gear feedback assembly includes at least one of a resistive feedback assembly, a magnetic induction feedback assembly, a pressure-sensitive feedback assembly, or a photoelectric feedback assembly.

Optionally, the gear feedback assembly includes a resistive feedback assembly. The resistive feedback assembly includes a conductive component and a resistive component electrically connected to the conductive component.

Optionally, the conductive component and/or the resistive component is connected to an external power source to form a closed circuit.

Optionally, the conductive component is mounted at one of the housing and the follower assembly, and the resistive component is mounted at another one of the housing and the follower assembly.

Optionally, one of the conductive component and the resistive component is configured to move relative to the other one of the conductive component and the resistive component under driving of the follower assembly, to change a resistance value in the closed circuit, and enable the closed circuit to output the gear feedback signal corresponding to the resistance value.

Optionally, the resistive component includes a plurality of resistors that are connected in series. The number of the resistors connected in the closed circuit is changed by electrically connecting the conductive component to different resistors of the plurality of resistors, enabling the resistance value in the closed circuit to be changed.

Optionally, the resistive component further includes a mounting plate and a plurality of conductive elements. The plurality of resistors and the plurality of conductive elements are mounted at the mounting plate.

Optionally, the plurality of conductive elements are arranged at intervals. The plurality of conductive elements are electrically connected to the plurality of resistors. The number of the resistors connected in the closed circuit is changed by electrically connecting the conductive component to different conductive elements of the plurality of conductive elements.

Optionally, the mounting plate includes a first surface and a second surface facing away from the first surface. The plurality of conductive elements are mounted at the first surface. The plurality of resistors are mounted at the second surface.

Optionally, the resistive component further includes a plurality of wires passing through the mounting plate and extending to the first surface and the second surface.

Optionally, two adjacent resistors of the plurality of resistors are connected through the respective wires of the plurality of wires and a corresponding one of the plurality of conductive elements, enabling the plurality of resistors to be connected in series
Optionally, the resistive component further includes a conductive member, a first external terminal, and a second external terminal. The conductive member, the first external terminal, and the second external terminal are mounted at the mounting plate.

Optionally, the conductive member and the conductive element are connected to the first external terminal and the second external terminal, respectively. The first external terminal and the second external terminal are connected to a positive electrode and a negative electrode of the external power source, respectively. The conductive component is connected to the conductive member and the conductive element to form the closed circuit.

Optionally, the conductive component has a first conductive portion and a second conductive portion that are spaced apart from each other. The first conductive portion is electrically connected to the conductive member. The second conductive portion is electrically connected to one of the plurality of conductive elements.

Optionally, the conductive component includes a mounting portion and an elastic contact portion connected to the mounting portion. The elastic contact portion is connected to the mounting portion and bent facing towards the conductive element.

Optionally, the elastic contact portion includes a first connection strip and a second connection strip that are spaced apart from each other.

Optionally, the first conductive portion is a first protrusion formed at the first connection strip, and the second conductive portion is a second protrusion formed at the second connection strip.

Optionally, each of the first connection strip and the second connection strip includes a bent segment and a straight segment connected to the bent segment. An end of the bent segment away from the straight segment is connected to the mounting portion and bent facing towards the conductive element relative to the mounting portion.

Optionally, the first protrusion and the second protrusion are respectively disposed at the straight segment of the first connection strip and the straight segment of the second connection strip.

Optionally, the conductive member is an annular conductive sheet.

Optionally, the follower assembly includes a first mounting boss. The first mounting boss has a plurality of gear portions arranged around an outer circumferential surface of the first mounting boss at intervals.

Optionally, the follower assembly further includes a second mounting boss connected to the first mounting boss. The conductive component is mounted at the first mounting boss and sleeved at an outer circumference of the second mounting boss.

Optionally, the resistive component is sleeved at the outer circumference of the second mounting boss.

Optionally, a diameter of the first mounting boss is greater than a diameter of the second mounting boss, enabling a step structure to be formed between the first mounting boss and the second mounting boss.

Optionally, the step structure has a positioning protrusion at a step surface of the step structure. The conductive component has a positioning hole, the positioning protrusion being engaged into the positioning hole.

Optionally, an outer circumferential surface of the resistive component does not extend beyond the outer circumferential surface of the first mounting boss.

Optionally, the plurality of gear portions are a plurality of limiting grooves formed at the outer circumferential surface of the first mounting boss. The plurality of limiting grooves are arranged at intervals in a circumferential direction of the first mounting boss.

Optionally, the gear limiting assembly includes a ball removably embedded in the limiting groove in a radial direction of the follower assembly to position the follower assembly.

Optionally, the gear limiting assembly further includes an elastic member connected to the ball. The elastic member is configured to apply a force that pushes the ball in the radial direction of the follower assembly, enabling the ball to be embedded in the limiting groove.

Optionally, the housing includes a base and a pressure cover. An accommodation cavity is formed by enclosing the base and the pressure cover. The pressure cover is connected to the base to limit the follower assembly within the accommodation cavity.

Optionally, the gear limiting assembly is disposed at the base.

Optionally, the resistive component is fixed relative to the pressure cover.

Optionally, the conductive component is fixed relative to the follower assembly.

Optionally, the pressure cover is provided with a hook. The mounting plate has a positioning groove at an outer circumferential surface of the mounting plate. A middle part of the hook is engaged in the positioning groove.

Optionally, a hook part of the hook is engaged with a surface of the mounting plate.

In an embodiment of the present disclosure, a plug valve is provided. The plug valve includes a valve body, a valve core, the valve stem, and the gear switch. The valve body has an inlet and an outlet. The valve core is rotatably disposed in the valve body and configured to regulate an opening degree between the inlet and the outlet. The valve stem is inserted into the valve body along an axial direction of the valve stem and connected to the valve core, to drive the valve core to rotate. The valve stem is connected to the follower assembly, to drive the follower assembly to rotate.

In an embodiment of the present disclosure, a gas appliance is provided. The gas appliance includes a stove body, a prompt member, and the plug valve. The stove body includes a frame and a front panel disposed at the frame. The prompt member is electrically connected to the gear feedback assembly. The front panel has a mounting hole. The gear switch of the plug valve is located in the mounting hole.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a partial schematic structural view of a gas appliance according to an embodiment of the present disclosure.
FIG. 2 is a partial schematic structural view of a gas appliance according to an embodiment of the present disclosure, viewed from another perspective.
FIG. 3 is a schematic structural view of a gear switch according to an embodiment of the present disclosure.
FIG. 4 is a schematic exploded view of a gear switch according to an embodiment of the present disclosure.
FIG. 5 is a schematic exploded view of a resistive component according to an embodiment of the present disclosure.
FIG. 6 is a schematic structural view of a resistive component according to an embodiment of the present disclosure. (with a mounting plate not illustrated).
FIG. 7 is a schematic exploded view of a follower assembly and a conductive member according to an embodiment of the present disclosure.
FIG. 8 is a schematic structural view of a conductive member according to an embodiment of the present disclosure.
FIG. 9 is a schematic structural view of a pressure cover according to an embodiment of the present disclosure.

### DETAILED DESCRIPTION OF THE EMBODIMENTS

Gas appliances utilize thermal energy generated from combustion of natural gas or liquefied gases (such as propane, butane, etc.). The high-temperature energy generated from combustion is converted into thermal energy that can be used for purposes such as cooking, heating, and drying. By adjusting a gas flow rate, combustion flame size can be effectively controlled to meet heat requirements of a user. However, traditional flow rate control devices can only adjust the flow rate and lack sufficient information feedback. The user often judges an adjustment effect by observing flame size, and it is difficult for the user to accurately know a specific current gas flow rate, which is inconvenient for the user to use.

Thus, the present disclosure provides a gas appliance 1 to solve the above-described technical problems. The gas appliance 1 may be a gas hob, a gas water heater, a gas heater, a gas dryer, a gas fireplace, a gas generator, etc., which is not limited in the present disclosure. In the present disclosure, a gas stove is used as an example to describe the following content.

The gas stove may include devices or assemblies such as a stove body, a piping device, an ignition device 30, and a plug valve 10. The stove body may include a frame and a burner disposed at the frame. The burner receives combustible gas through the piping device, and the ignition device 30 ignites the combustible gas in a combustion chamber of the burner to achieve combustion. The plug valve 10 is in communication with the piping device and the burner to adjust and control the gas flow rate.

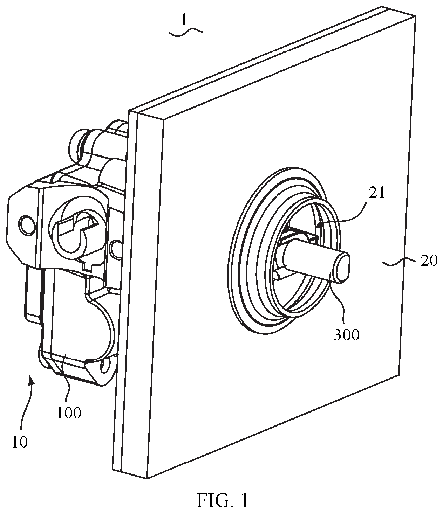

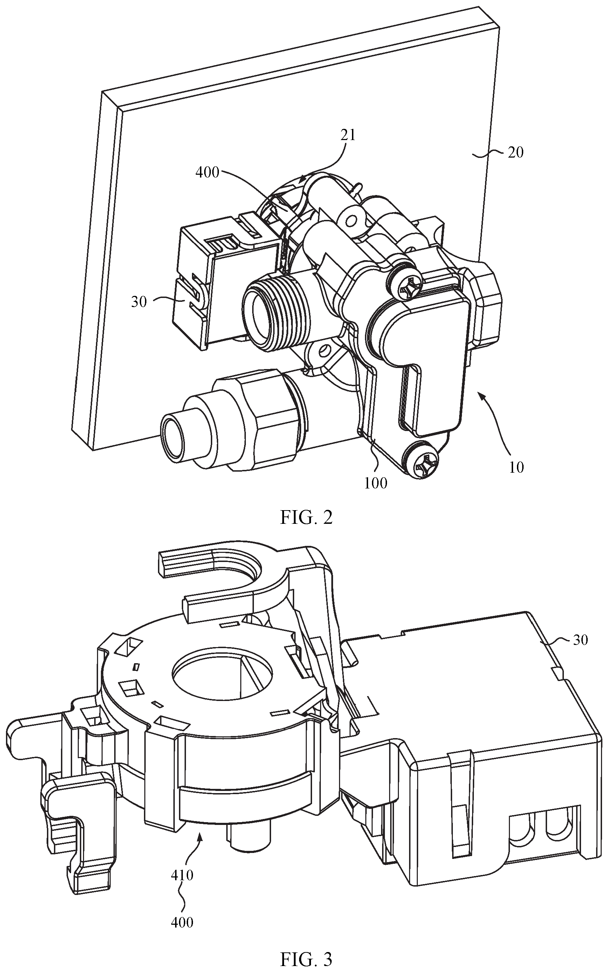

As illustrated in FIG. 1 and FIG. 2, the plug valve 10 may include a valve body 100, a valve core, a valve stem 300, and a gear switch 400. The valve body 100 has an inlet and an outlet. The inlet of the valve body 100 is in communication with the piping device, and the outlet of the valve body 100 is in communication with the burner. The valve core is rotatably disposed in the valve body 100 to regulate an opening degree between the inlet and the outlet, adjusting the gas flow rate passing through, and further adjusting the combustion flame size. The valve stem 300 is inserted into the valve body 100 along an axial direction of the valve stem 300 and connected to the valve core, to drive the valve core to rotate. The gear switch 400 is in transmission connection with the valve stem 300, and can relatively fix the valve stem 300 to one of a plurality of gears during rotation of the valve stem 300. In this way, the user can select a fixed gas flow rate to meet specific cooking requirements or heating requirements.

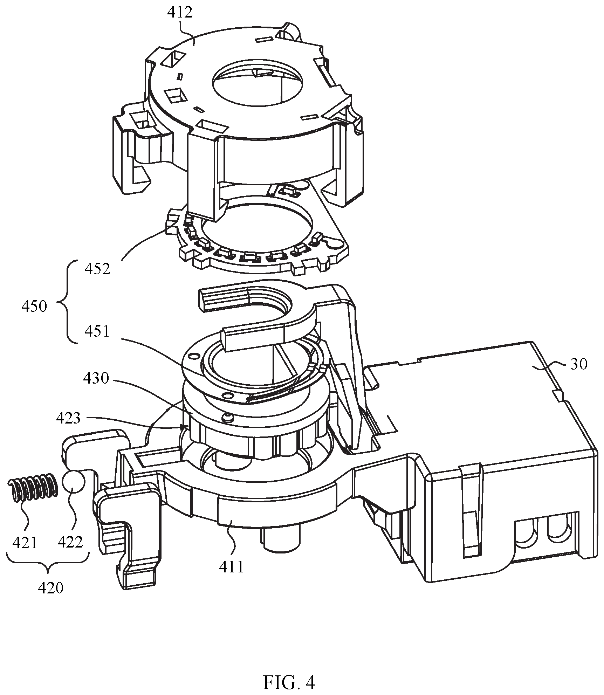

To achieve adjustment of the gas flow rate while enabling feedback on a current flow rate status, as illustrated in FIG. 3 and FIG. 4, the present disclosure has made an improved design for the gear switch 400. The gear switch 400 includes a housing 410, a gear limiting assembly 420, a follower assembly 430, and a gear feedback assembly 450.

The gear limiting assembly 420, the follower assembly 430, and the gear feedback assembly 450 are disposed in the housing 410. The follower assembly 430 is connected to the valve stem 300 and configured to rotate following the valve stem 300. The follower assembly 430 has a plurality of gears and is configured to be limited in one of the plurality of gears by the gear limiting assembly 420.The gear feedback assembly 450 is configured to detect a current gear of the plurality of gears of the follower assembly 430 and output a corresponding gear feedback signal. Through combination of the gear limiting assembly 420 and the follower assembly 430, the valve stem 300 can be accurately fixed at one of the plurality of preset gears, in such a manner that the user can easily select and maintain a required gas flow rate. Through the gear feedback assembly 450, a current gear can be understood, which facilitates determination and adjustment of a required gear.

The follower assembly 430 in the present disclosure has the plurality of gears, that is, regulation of the opening degree of the valve body 100 is stepped regulation. Each gear in the stepped regulation corresponds to a specific gas flow rate and flame size. The user can select an appropriate gear to meet different cooking needs, such as rapid boiling, stir-frying over medium heat, or simmering over low heat. Switching between each gear is clear and distinct. The user can drive the valve stem 300 to rotate to the appropriate gear via a knob, and select a suitable fire level without excessive adjustment or trial and error.

In some embodiments, the gas stove may include a prompt member electrically connected to the gear feedback assembly 450 to prompt the user of a current gear status. The prompt member may be in a form of a display screen, light indication, sound indication, digital indication, or the like, and the present disclosure imposes no limitation thereon. The display screen can show numbers, icons, or text to clearly present a currently selected gear. The light indication can indicate different gears through LED lights of different colors or flashing modes. For example, each gear corresponds to a different light state, such as green, yellow, or red light. Digital indicator lights are similar to the display screen but only show numbers. Each number corresponds to one gear, enabling the user to quickly identify the currently selected gear. Sound prompts convey current gear information to the user through audio prompts or sound signals. This method is more practical for visually impaired users or those operating in busy environments.

The gear feedback assembly 450 includes at least one of a resistive feedback assembly, a magnetic induction feedback assembly, a pressure-sensitive feedback assembly, or a photoelectric feedback assembly.

To be specific, the resistive feedback assembly detects and feeds back a position based on changes in a resistor 4522. The resistive feedback assembly may include a movable resistor 4522 or a potentiometer. When a position of the follower assembly 430 is changed, a resistance value is changed accordingly. By measuring this resistance value, a system can determine a position of the current gear. The resistance value may be converted into a voltage signal or a digital signal for the purpose of processing and displaying to the user.

The magnetic induction feedback assembly detects the position by utilizing changes in the magnetic field. The magnetic induction feedback assembly may include a movable magnetic element and a fixed magnetic induction element. When the position of the follower assembly 430 is changed, intensity or a position of the magnetic may be changed. Such changes can be detected and measured by a magnetic induction sensor to determine the position of the current gear. The magnetic induction sensor may be a Hall effect sensor, or a magneto resistive sensor, etc.

The pressure-sensitive feedback assembly detects the position by utilizing a mechanical pressure or deformation. When the follower assembly 430 moves, different forces or pressures may be applied to a pressure-sensitive element. A pressure-sensitive sensor can measure changes in these forces or pressures to determine the position of the current gear.

The photoelectric feedback assembly detects position changes by using an optical sensor. The photoelectric feedback assembly may include a light-emitting diode (LED) and a photosensitive element (such as a photodiode or a phototransistor). When the position of the follower assembly 430 is changed, an optical path may be changed, causing the photosensitive element to receive different intensities of optical signals. By measuring changes in these optical signals, the system can determine the position of the current gear.

Those skilled in the art may select an appropriate feedback assembly based on specific application requirements, including comprehensive consideration of factors such as cost, performance requirements, and environmental factors. Here, the present disclosure does not limit a specific form of the gear feedback assembly 450.

In some embodiments of the present disclosure, the resistive feedback assembly includes a conductive component 451 and a resistive component 452 electrically connected to the conductive component 451. The conductive component 451 and/or the resistive component 452 is connected to an external power source to form a closed circuit. The conductive component 451 is mounted at one of the housing 410 and the follower assembly 430, and the resistive component 452 is mounted at another one of the housing 410 and the follower assembly 430. One of the conductive component 451 and the resistive component 452 is configured to move relative to the other one of the conductive component 451 and the resistive component 452 under driving of the follower assembly 430, to change a resistance value in the closed circuit, and enable the closed circuit to output the gear feedback signal corresponding to the resistance value.

Exemplarily, the resistive component 452 is mounted at the housing 410, and the conductive component 451 is mounted at the follower assembly 430. Under the driving of the valve stem 300, the conductive component 451 can rotate with rotation of the follower assembly 430, in such a manner that the conductive component 451 moves relative to the resistive component 452. In this way, the resistance value of the closed circuit is changed by changing a relative contact position between the conductive component 451 and the resistive component 452, and the closed circuit outputs the gear feedback signal corresponding to the resistance value, enabling the user to understand the current gear status.

In the present disclosure, the resistance value varies in a linear relationship when the conductive component 451 and the resistive component 452 move. This linear relationship means that a change in the resistance value can directly and accurately reflect a position change of the follower assembly 430, enabling fine adjustment of the gas flow rate. In addition, the resistive feedback assembly generally has a fast response speed. Since the change in the resistance value is instantaneous, a feedback signal can be quickly transmitted to a control system, achieving a rapid feedback on the gas flow rate. Moreover, the resistive feedback assembly has high stability and is less likely to be affected by the environmental factors. Temperature changes and electromagnetic interference are common issues faced by many electronic devices, but the resistive feedback assembly, with simple physical principle and structural design, effectively reduces an impact of these external factors on accuracy of the feedback signal. In this way, the resistive feedback assembly can maintain stable performance even under harsh environmental conditions. Further, the resistive feedback assembly has a simple manufacturing process and relatively low material cost, which is more economical compared to other types of feedback assemblies.

The resistive component 452 includes a plurality of resistors 4522 that are connected in series. The number of the resistors 4522 connected in the closed circuit is changed by electrically connecting the conductive component 451 to different resistors 4522 of the plurality of resistors 4522, enabling the resistance value in the closed circuit to be changed. To be specific, by changing electrical connection of different resistors 4522 of the conductive component 451, the number of the resistors 4522 connected in the closed circuit can be selected, enabling a total resistance value of the closed circuit to be changed. Since the resistive component 452 includes the plurality of resistors 4522 connected in series, a required resistance value can be selected based on a specific requirement. The value of each resistor 4522 is known and can be accurately calculated and controlled. Therefore, by combining different resistors 4522, accurate adjustment of the resistance value can be achieved to meet specific feedback requirements. Compared to the use of a single large resistor regulator, this design of the series-connected resistive component 452 can save space and facilitate mounting in a limited on-board space or an internal space of an apparatus.

Of course, in other embodiments, the resistive component 452 may also adopt an integral long strip form. The resistance value in the closed circuit is changed by connecting the conductive component 451 to different positions of resistive component 452, and the present disclosure is not limited thereto.

To facilitate the electrical connection between the conductive component 451 and the different resistors 4522, the resistive component 452 further includes a mounting plate 4521 and a plurality of conductive elements 4523. The plurality of resistors 4522 and the plurality of conductive elements 4523 are mounted at the mounting plate 4521. The plurality of conductive elements 4523 are arranged at intervals. The plurality of conductive elements 4523 are electrically connected to the plurality of resistors 4522. The number of the resistors 4522 connected in the closed circuit is changed by electrically connecting the conductive component 451 to different conductive elements 4523 of the plurality of conductive elements 4523.

Serving as a support platform for the resistor 4522 and the conductive element 4523, the mounting plate 4521 provides a stable fixing point for the resistor 4522 and the conductive element 4523, ensuring that positions of the resistor 4522 and the conductive element 4523 in a circuit are accurate, and reducing circuit failure caused by loosening or displacement of the elements. The mounting plate 4521 may also act as a heat dissipation passage to help dissipate heat generated during operation of the resistor 4522. Also, the mounting plate 4521 may also provide necessary insulation protection to prevent short circuit or leakage in the circuit.

The plurality of conductive elements 4523 may be in a form of conductive sheets and are arranged at intervals at the mounting plate 4521. A contact area between the conductive sheet and the conductive component 451 is large, and a contact pressure is uniformly distributed, which contributes to reduction of the resistor 4522 and reduction of signal loss. In addition, the conductive sheet is usually made of wear-resistant and corrosion-resistant materials, which can withstand long-term use without being easily damaged. Such materials include but are not limited to copper, aluminum, silver, copper alloys, aluminum alloys, and composite polymer conductive materials (e.g., nickel-coated graphite powder, nickel-coated carbon fiber carbon black, metal powder, metal foil, metal fiber, carbon fiber, etc.).

The present disclosure employs stepped adjustment, with one gear corresponding to one resistance value. Thus, the above-described form of connecting the plurality of resistors 4522 in series can be employed. Compared to a stepped adjustment method in which the resistor 4522 are used to feedback, this stepped adjustment method needs to slide continuously, thus a long-stripped resistive component 452 or a long-stripped potentiometer is required. However, with long-term use, sliding contact parts of these resistive components 452 or potentiometers can wear, easily causing changes in the resistance value or malfunction. In the present disclosure, the number of the resistors 4522 connected in the closed circuit is changed by connecting a conductive member 4525 to different conductive sheets, which can avoid a wear problem of the parts in sliding contact with the resistive component 452.

Further, ordinary potentiometers used in the stepped adjustment may have a problem of resistance value drift, while high-precision potentiometers are costly. The method of connecting the plurality of resistors 4522 in series in the present disclosure avoids such drift by maintaining the resistance value, which improves stability and reliability of the circuit, and can reduce costs to a certain extent. In addition, the resistance values of some potentiometers may change with temperature changes, but the method of connecting the plurality of fixed resistors 4522 in series in the present disclosure can reduce an impact of such temperature coefficient. Since the resistance value of each resistor 4522 is fixed and less likely to be affected by the temperature changes, an entire circuit has higher temperature stability. The method of connecting the plurality of resistors 4522 in series adopted in the stepped adjustment of the present disclosure features a lower cost, higher stability, and more convenient mounting, which allows for a miniaturized design.

To further effectively utilize an on-board space, as illustrated in FIG. 4 to FIG. 6, the mounting plate 4521 includes a first surface and a second surface facing away from the first surface. The plurality of conductive elements 4523 are mounted at the first surface. The plurality of resistors 4522 are mounted at the second surface. The resistive component 452 further includes a plurality of wires 4524 passing through the mounting plate 4521 and extending to the first surface and the second surface. Two adjacent resistors 4522 of the plurality of resistors 4522 are connected through the wires 4524 and the conductive element 4523, enabling the plurality of resistors 4522 to be connected in series. To be specific, in the present disclosure, one resistor 4522 is connected to one conductive element 4523 at another end through the wire 4524, while the conductive element 4523 is connected to a resistor 4522 located behind this resistor 4522 through the wire 4524. By analogy, the plurality of resistors 4522, the plurality of wires 4524, and the plurality of conductive elements 4523 are connected in sequence. At this time, the conductive member 4525 is connected to different conductive elements 4523, that is, the adjusting of the number of the resistors 4522 connected in the circuit can be realized.

By respectively mounting the conductive element 4523 and the resistor 4522 at two surfaces of the mounting plate 4521, the present disclosure can maximize utilization of a surface area of the mounting plate 4521 and reduce occupancy conflicts between the elements, thus saving the precious on-board space. In addition, using the wires 4524 passing through the mounting plate 4521 to sequentially connect the plurality of resistors 4522 and the plurality of conductive elements 4523 can simplify wiring of the circuit and reduce the number of the wires 4524 and crossover points, lowering a risk of circuit failure. Since the conductive element 4523 and the resistor 4522 are respectively mounted at the two surfaces of the mounting plate 4521, faulty elements can be more easily accessed and replaced during maintenance. Further, if circuit performance needs to be upgraded, elements such as the resistor 4522 can also be added or replaced more conveniently.

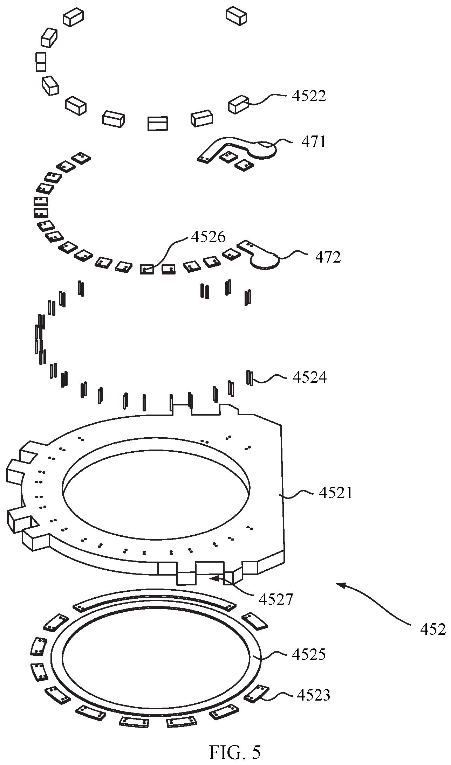

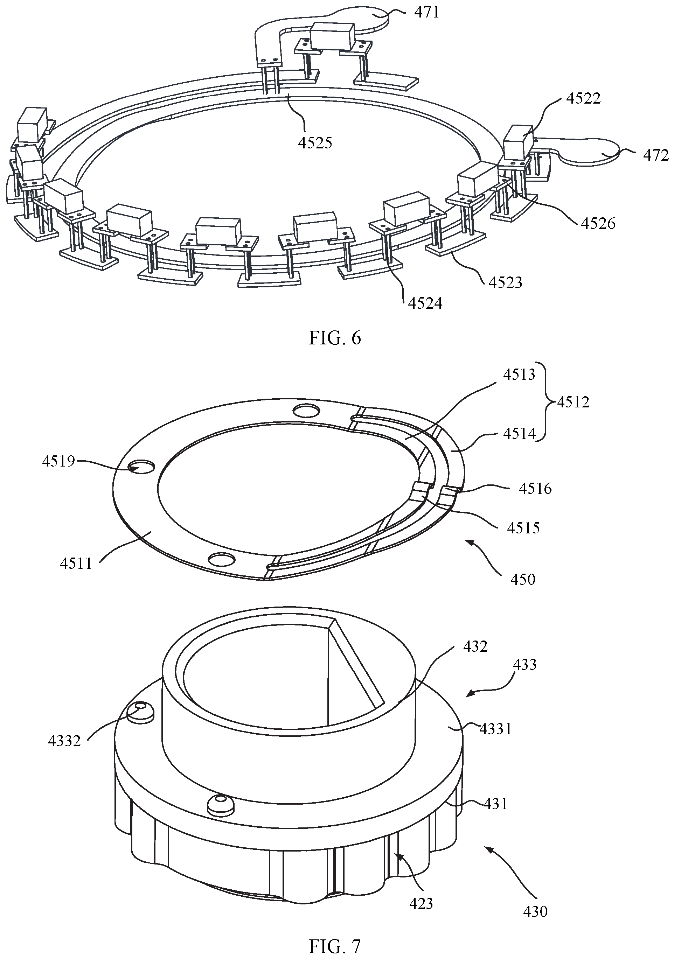

As illustrated in FIG. 5 and FIG. 6, to facilitate mounting of the resistor 4522, the resistive component 452 further includes a plurality of connection sheets 4526. The plurality of connection sheets 4526 are mounted at the second surface and connected to the wire 4524. The resistor 4522 is connected to the wire 4524 through the connection sheet 4526.

In some embodiments, further referring to FIG. 5 and FIG. 6, the resistive component 452 further includes a conductive member 4525, a first external terminal 471, and a second external terminal 472. The conductive member 4525, the first external terminal 471, and the second external terminal 472 are mounted at the mounting plate 4521. The conductive member 4525 and the conductive element 4523 are connected to the first external terminal 471 and the second external terminal 472, respectively. The first external terminal 471 and the second external terminal 472 are connected to a positive electrode and a negative electrode of the external power source, respectively. The conductive component 451 is connected to the conductive member 4525 and the conductive element 4523 to form the closed circuit. The external terminals are mounted at the mounting plate 4521 to facilitate electrical connection with an external circuit. The conductive member 4525 is electrically connected to the conductive element 4523 through the conductive component 451, to turn on the circuit and realize feedback of the circuit signal. In the present disclosure, the conductive member 4525, the external terminals, the conductive element 4523, and the resistor 4522 are all tightly mounted at the mounting plate 4521, in such a manner that an entire circuit structure is compact, a space utilization rate is high, and a volume and a weight of the circuit are reduced.

Of course, in other embodiments, the conductive component 451 may be connected to the positive electrode and the negative electrode of the power source, or the conductive member 4525 and the series-connected resistor 4522 are connected to the positive electrode and negative electrode of the power source, respectively, which is not limited in the present disclosure.

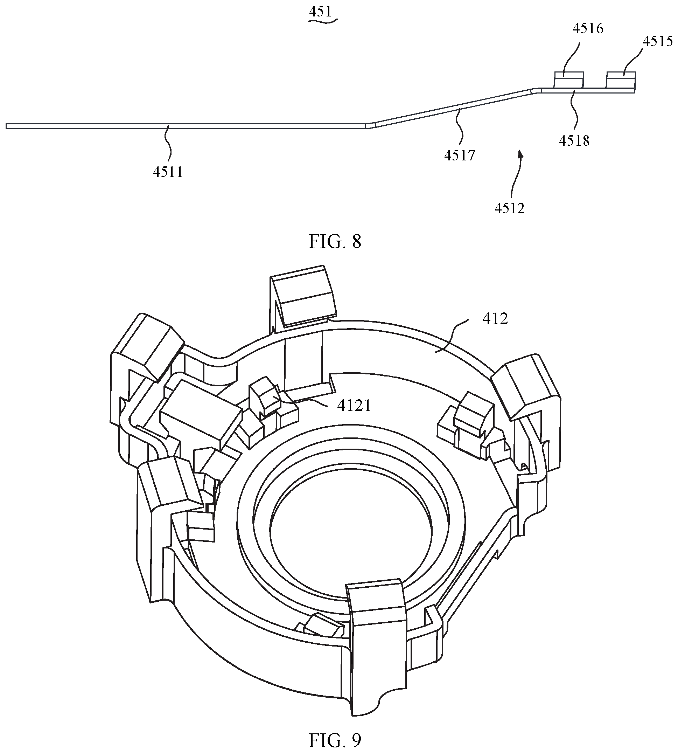

To facilitate connection between the conductive component 451 and the conductive member 4525 and the conductive element 4523, as illustrated in FIG. 7 and FIG. 8, the conductive component 451 has a first conductive portion 4515 and a second conductive portion 4516 that are spaced apart from each other. The first conductive portion 4515 is electrically connected to the conductive member 4525. The second conductive portion 4516 is electrically connected to one of the plurality of conductive elements 4523. The first conductive portion 4515 and the second conductive portion 4516 are spaced apart from each other, in such a manner that it is possible to clearly identify which part should be connected to the conductive member 4525 and which part should be connected to the conductive element 4523 in a connection process, reducing a likelihood of incorrect connection. Since a connection point is clear, the electrical connection between the conductive component 451 and the conductive member 4525 and the conductive element 4523 can be ensured to be firm and reliable, reducing the circuit failure caused by poor contact or loosening.

Further, referring to FIG. 7 and FIG. 8 again, to improve stability of the connection between the conductive component 451 and the conductive member 4525 and the conductive element 4523, the conductive component 451 includes a mounting portion 4511 and an elastic contact portion 4512 connected to the mounting portion 4511. The elastic contact portion 4512 is connected to the mounting portion 4511 and bent facing towards the conductive element 4523. The elastic contact portion 4512 includes a first connection strip 4513 and a second connection strip 4514 that are spaced apart from each other. The first conductive portion 4515 is a first protrusion formed at the first connection strip 4513, and the second conductive portion 4516 is a second protrusion formed at the second connection strip 4514. Since the elastic contact portion 4512 may be bent facing towards the conductive element 4523, it is ensured that a favorable contact effect can be maintained under different temperatures and vibration conditions. The elastic contact portion 4512 has characteristics of automatic adaptation and tight contact, in such a manner that operation steps can be simplified in a mounting process, and mounting difficulty can be reduced. The first protrusion and the second protrusion, as conductive portions, are directly in contact with the conductive member 4525 and the conductive element 4523. In this way, a contact area is increased, and the contact resistor 4522 is reduced, thus improving the stability and efficiency of the circuit.

Further referring to FIG. 7 and FIG. 8, each of the first connection strip 4513 and the second connection strip 4514 includes a bent segment 4517 and a straight segment 4518 connected to the bent segment 4517. An end of the bent segment 4517 away from the straight segment 4518 is connected to the mounting portion 4511 and bent facing towards the conductive element 4523 relative to the mounting portion 4511. The first protrusion and the second protrusion are respectively disposed at the straight segment 4518 of the first connection strip 4513 and the straight segment 4518 of the second connection strip 4514. The bent segment 4517 provided in the present disclosure enables a part where the conductive component 451 is in contact with the conductive member 4525 and the conductive element 4523 to have certain deformation capability, in such a manner that the first conductive portion 4515 and the second conductive portion 4516 can be stably electrically connected to the conductive member 4525 and the conductive element 4523, respectively. Also, the straight segment 4518 provided enables the first conductive portion 4515 and the second conductive portion 4516 to be relatively parallel to the conductive member 4525 and the conductive element 4523 in an up-down direction, facilitating easier positioning and alignment, with a larger contact area and higher connection stability.

The conductive member 4525 is an annular conductive sheet. It should be understood that, since the follower assembly 430 rotates along a circular path, the conductive component 451 can be driven to rotate during the rotation of the follower assembly 430. By designing the conductive member 4525 as the annular conductive sheet, the conductive component 451 can be connected to the conductive member 4525 regardless of a position in which the conductive component 451 is rotated. The conductive elements 4523 may be arranged at intervals at the required feedback gears. It should be understood that, when the follower assembly 430 rotates to each gear, the conductive component 451 can be electrically connected to one conductive element 4523. When the follower assembly 430 is at a zero position, that is, when the plug valve 10 is in an off state, a corresponding gear should also be provided.

As illustrated in FIG. 7, the follower assembly 430 includes a first mounting boss 431 and a second mounting boss 432 connected to the first mounting boss 431. The first mounting boss 431 has a plurality of gear portions arranged around an outer circumferential surface of the first mounting boss 431 at intervals. The conductive component 451 is mounted at the first mounting boss 431 and sleeved at an outer circumference of the second mounting boss 432. The resistive component 452 is sleeved at the outer circumference of the second mounting boss 432. In this way, the gear portion may be formed at the follower assembly 430, which also facilitates relative fixation of the conductive component 451, enabling the conductive component 451 to rotate with the rotation of the follower assembly 430. The mounting plate 4521 has a central hole. The second mounting boss 432 passes through the central hole. The plurality of resistors 4522 and the plurality of conductive elements 4523 are arranged in a circumferential array with the central hole as a center.

Further, as illustrated in FIG. 7, a diameter of the first mounting boss 431 is greater than a diameter of the second mounting boss 432, enabling a step structure 433 to be formed between the first mounting boss 431 and the second mounting boss 432. The step structure 433 has a positioning protrusion 4332 at a step surface 4331 of the step structure 433. The conductive component 451 has a positioning hole 4519, and the positioning protrusion4332 is engaged into the positioning hole 4519. The mounting portion 4511 of the conductive component 451 has the positioning hole 4519. During mounting, the mounting portion 4511 is attached to the step surface 4331, and the positioning protrusion 4332 is engaged with and fixed to the positioning hole 4519, in such a manner that the conductive component 451 is fixed to the first mounting boss 431. In other embodiments, fasteners such as screws may be used to fix the conductive component 451 to a mounting surface. In the present disclosure, the conductive component 451 is attached and fixed to a mounting surface of the follower assembly 430. Thus, during the rotation of the follower assembly 430, there is no rotational play between the follower assembly 430 and the conductive component 451, which improves feedback accuracy of a signal. In some embodiments, an outer circumferential surface of the resistive component 452 does not extend beyond the outer circumferential surface of the first mounting boss 431. That is, in a radial direction of the first mounting boss 431, an outer circumferential surface of the mounting plate 4521 does not extend beyond the outer circumferential surface of the first mounting boss 431. In this way, a volume of the gear switch 400 can be smaller.

As illustrated in FIG. 4, the plurality of gear portions are a plurality of limiting grooves 423 formed at the outer circumferential surface of the first mounting boss 431. The plurality of limiting grooves 423 are arranged at intervals in a circumferential direction of the first mounting boss 431. The gear limiting assembly 420 includes a ball 422 and an elastic member 421. The ball 422 is removably embedded in the limiting groove 423 in a radial direction of the follower assembly 430 to position the follower assembly 430. The elastic member 421 is connected to the ball 422. The elastic member 421 is configured to apply a force that pushes the ball 422 in the radial direction of the follower assembly 430, enabling the ball 422 to be embedded in the limiting groove 423. The elastic member 421 may be a spring connected to the ball 422 and configured to apply a thrust on the ball 422 in the radial direction of the follower assembly 430. This thrust maintains contact between the ball 422 and the limiting groove 423, ensuring stability of positioning. Also, when gear shifting is required, rotating the follower assembly 430 can overcome the thrust of the elastic member 421, enabling the ball 422 to disengage from the limiting groove 423 and enabling the follower assembly 430 to move to a next gear. Once an external force disappears, the elastic member 421 may push the ball 422 to re-embed in a new limiting groove 423, completing shifting and positioning of the gear. This positioning method is simple and has a low cost, enabling the mounting to be convenient.

As illustrated in FIG. 4, the housing 410 includes a base 411 and a pressure cover 412. The base 411 and the pressure cover 412 enclose to form an accommodation cavity. The pressure cover 412 is connected to the base 411 to limit the follower assembly 430 within the accommodation cavity. The gear limiting assembly 420 is disposed at the base 411. The resistive component 452 is fixed relative to the pressure cover 412. The conductive component 451 is fixed relative to the follower assembly 430.

The base 411 may have a mounting groove and a fixing groove in communication with the mounting groove. The gear limiting assembly 420 is mounted in the fixing groove. After the conductive component 451 is mounted at the follower assembly 430, the follower assembly 430 is then embedded in the mounting groove. At this time, the ball 422 may come into contact with the gear at an outer circumferential surface of the follower assembly 430. Then, the mounting plate 4521 is fixed relative to the pressure cover 412, in such a manner that the resistive component 452 is mounted at the pressure cover 412. The pressure cover 412 is then covered at the base 411 and connected to the base 411, to form a semi-enclosed accommodating cavity. Thus, mounting of the gear switch 400 is completed, and the housing 410 can also protect internal components. In addition, both the pressure cover 412 and the base 411 have a through hole, and the follower assembly 430 has a fixing hole at a middle part of the follower assembly 430. The valve stem 300 passes through the through hole and is fixed relative to the fixing hole of the follower assembly 430 in a circumferential direction. The valve stem 300 may pass through the fixing hole to be fixedly connected to the valve core. In this way, rotation of the valve stem 300 drives the follower assembly 430 to rotate, which further drives the valve core to rotate.

The pressure cover 412 may be connected to the base 411 through threads, clips, bolts, or the like. A design of the pressure cover 412 is usually intended to take easy disassembly and remounting into account to facilitate maintenance or replacement of the follower assembly 430.

It should be further noted that, the pressure cover 412 in the present disclosure may have a mounting groove at an inner surface of the pressure cover 412, and an end of the second mounting boss 432 away from the first mounting boss 431 is at least partially embedded in the mounting groove, in such a manner that stability of relative rotation of the follower assembly 430 can be enhanced. Further, the first mounting boss 431 has a protrusion portion at an end of the first mounting boss 431 away from the second mounting boss 432. The base 411 also has the mounting groove. The protrusion portion is embedded in the mounting groove and rotates within the mounting groove. Thus, stability of the rotation of the follower assembly 430 is further enhanced.

To facilitate fixation of the resistive component 452 relative to the pressure cover 412, as illustrated in FIG. 9, the pressure cover 412 is provided with a hook 4121, the mounting plate 4521 has a positioning groove 4527 at the outer circumferential surface of the mounting plate 4521, a middle part of the hook 4121 is engaged in the positioning groove 4527, and a hook part of the hook 4121 is engaged with a surface of the mounting plate 4521. With such a configuration, the middle part of the hook 4121 is engaged with the positioning groove 4527 for positioning, enabling the resistive component 452 to be fixed relative to the pressure cover 412 in the radial direction. Meanwhile, a tail end of the hook 4121, i.e., the hook part of the hook 4121, is engaged with the surface of the mounting plate 4521, which enables the resistive component 452 to be fixed relative to the pressure cover 412 in an axial direction. With this design, when the hook part of the hook 4121 is fully engaged into place with the mounting plate 4521, a locking mechanism may be formed, preventing the resistive component 452 from loosening or falling off during operation of the follower assembly 430.

In some embodiments, referring back to FIG. 1 and FIG. 2, the stove body of the gas stove in the present disclosure further includes a front panel 20 disposed at the frame. The front panel 20 has a mounting hole 21, and the gear switch 400 of the plug valve 10 is located in the mounting hole 21. By embedding the gear switch 400 inside the front panel 20, a protrusion degree of the gear switch 400 outside the stove body can be significantly reduced, reducing occupation of an overall space of the stove body. Further, the front panel 20 can protect the gear switch 400 from external impact and contamination to a certain extent, and extend a service life of the gear switch 400.

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of above terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A gear switch, applied to a plug valve, the plug valve comprising a valve stem, wherein the gear switch comprises:
a housing;
a gear limiting assembly disposed at the housing;
a follower assembly connected to the valve stem and configured to rotate following the valve stem, wherein the follower assembly has a plurality of gears and is configured to be limited in one of the plurality of gears by the gear limiting assembly; and
a gear feedback assembly disposed in the housing, wherein the gear feedback assembly is configured to detect a current gear of the plurality of gears of the follower assembly and output a corresponding gear feedback signal.

2. The gear switch according to claim 1, wherein the gear feedback assembly comprises at least one of a resistive feedback assembly, a magnetic induction feedback assembly, a pressure-sensitive feedback assembly, or a photoelectric feedback assembly.

3. The gear switch according to claim 1 or 2, wherein the gear feedback assembly comprises a resistive feedback assembly, the resistive feedback assembly comprising a conductive component and a resistive component electrically connected to the conductive component, wherein:
the conductive component and/or the resistive component is connected to an external power source to form a closed circuit;
the conductive component is mounted at one of the housing and the follower assembly; and
the resistive component is mounted at the other one of the housing and the follower assembly,
wherein one of the conductive component and the resistive component is configured to move relative to the other one of the conductive component and the resistive component under driving of the follower assembly, to change a resistance value in the closed circuit, and enable the closed circuit to output the gear feedback signal corresponding to the resistance value.

4. The gear switch according to claim 3, wherein the resistive component comprises a plurality of resistors that are connected in series,
wherein the number of the resistors connected in the closed circuit is changed by electrically connecting the conductive component to different resistors of the plurality of resistors, enabling the resistance value in the closed circuit to be changed.

5. The gear switch according to claim 3 or 4, wherein the resistive component further comprises a mounting plate and a plurality of conductive elements, wherein:
the plurality of resistors and the plurality of conductive elements are mounted at the mounting plate;
the plurality of conductive elements are arranged at intervals; and
the plurality of conductive elements are electrically connected to the plurality of resistors,
wherein the number of the resistors connected in the closed circuit is changed by electrically connecting the conductive component to different conductive elements of the plurality of conductive elements.

6. The gear switch according to claim 5, wherein:
the mounting plate comprises a first surface and a second surface facing away from the first surface, the plurality of conductive elements being mounted at the first surface, and the plurality of resistors being mounted at the second surface; and
the resistive component further comprises a plurality of wires passing through the mounting plate and extending to the first surface and the second surface, wherein two adjacent resistors of the plurality of resistors are connected through respective wires of the plurality of wires and a corresponding one of the plurality of conductive elements, enabling the plurality of resistors to be connected in series.

7. The gear switch according to claim 5 or 6, wherein the resistive component further comprises a conductive member, a first external terminal, and a second external terminal, wherein the conductive member, the first external terminal, and the second external terminal are mounted at the mounting plate, wherein:
the conductive member and the conductive element are connected to the first external terminal and the second external terminal, respectively;
the first external terminal and the second external terminal are connected to a positive electrode and a negative electrode of the external power source, respectively; and
the conductive component is connected to the conductive member and the conductive element to form the closed circuit.

8. The gear switch according to any one of claims 5 to 7, wherein the conductive component has a first conductive portion and a second conductive portion that are spaced apart from each other, wherein:
the first conductive portion is electrically connected to the conductive member; and
the second conductive portion is electrically connected to one of the plurality of conductive elements.

9. The gear switch according to claim 8, wherein the conductive component comprises a mounting portion and an elastic contact portion connected to the mounting portion, wherein:
the elastic contact portion is connected to the mounting portion and bent facing towards the conductive element; and
the elastic contact portion comprises a first connection strip and a second connection strip that are spaced apart from each other,
wherein the first conductive portion is a first protrusion formed at the first connection strip, and the second conductive portion is a second protrusion formed at the second connection strip.

10. The gear switch according to claim 9, wherein each of the first connection strip and the second connection strip comprises a bent segment and a straight segment connected to the bent segment, wherein:
an end of the bent segment away from the straight segment is connected to the mounting portion and bent facing towards the conductive element relative to the mounting portion; and
the first protrusion and the second protrusion are respectively disposed at the straight segment of the first connection strip and the straight segment of the second connection strip.

11. The gear switch according to any one of claims 7 to 10, wherein the conductive member is an annular conductive sheet.

12. The gear switch according to any one of claims 3 to 11, wherein the follower assembly comprises a first mounting boss and a second mounting boss connected to the first mounting boss, wherein:
the first mounting boss has a plurality of gear portions arranged around an outer circumferential surface of the first mounting boss at intervals;
the conductive component is mounted at the first mounting boss and sleeved at an outer circumference of the second mounting boss; and
the resistive component is sleeved at the outer circumference of the second mounting boss.

13. The gear switch according to claim 12, wherein a diameter of the first mounting boss is greater than a diameter of the second mounting boss, enabling a step structure to be formed between the first mounting boss and the second mounting boss, wherein:
the step structure has a positioning protrusion at a step surface of the step structure; and
the conductive component has a positioning hole, the positioning protrusion being engaged into the positioning hole.

14. The gear switch according to claim 12 or 13, wherein an outer circumferential surface of the resistive component does not extend beyond the outer circumferential surface of the first mounting boss.

15. The gear switch according to any one of claims 12 to 14, wherein:
the plurality of gear portions are a plurality of limiting grooves formed at the outer circumferential surface of the first mounting boss, the plurality of limiting grooves being arranged at intervals in a circumferential direction of the first mounting boss; and
the gear limiting assembly comprises:
a ball removably embedded in the limiting groove in a radial direction of the follower assembly to position the follower assembly; and
an elastic member connected to the ball, wherein the elastic member is configured to apply a force that pushes the ball in the radial direction of the follower assembly, enabling the ball to be embedded in the limiting groove.

16. The gear switch according to any one of claims 5 to 15, wherein the housing comprises a base and a pressure cover, wherein:
an accommodation cavity is formed by enclosing the base and the pressure cover;
the pressure cover is connected to the base to limit the follower assembly within the accommodation cavity;
the gear limiting assembly is disposed at the base;
the resistive component is fixed relative to the pressure cover; and
the conductive component is fixed relative to the follower assembly.

17. The gear switch according to claim 16, wherein:
the pressure cover is provided with a hook; and
the mounting plate has a positioning groove at an outer circumferential surface of the mounting plate,
wherein a middle part of the hook is engaged in the positioning groove, and a hook part of the hook is engaged with a surface of the mounting plate.

18. A plug valve, comprising:
a valve body having an inlet and an outlet;
a valve core rotatably disposed in the valve body and configured to regulate an opening degree between the inlet and the outlet;
the gear switch according to any one of claims 1 to 17; and
the valve stem, wherein the valve stem is inserted into the valve body along an axial direction of the valve stem and connected to the valve core, to drive the valve core to rotate, and wherein the valve stem is connected to the follower assembly, to drive the follower assembly to rotate.

19. A gas appliance, comprising:
a stove body comprising a frame and a front panel disposed at the frame;
the plug valve according to claim 18; and
a prompt member electrically connected to the gear feedback assembly,
wherein the front panel has a mounting hole, the gear switch of the plug valve being located in the mounting hole.
